Europäisches Patentamt

European Patent Office

Office européen des brevets

(19)

(11) Publication number: **0 057 488**
**B1**

# (12) EUROPEAN PATENT SPECIFICATION

(45) Date of publication of patent specification: **02.10.85**

(21) Application number: **82200126.9**

(22) Date of filing: **29.01.82**

(51) Int. Cl.⁴: **C 08 L 75/04,** C 09 D 5/08,
C 08 G 18/10, C 08 G 18/69,
C 08 K 3/24, C 08 K 5/42

(54) **Spray-on corrosion inhibiting composition.**

(30) Priority: **04.02.81 NL 8100516**

(43) Date of publication of application:
**11.08.82 Bulletin 82/32**

(45) Publication of the grant of the patent:
**02.10.85 Bulletin 85/40**

(84) Designated Contracting States:
**AT BE CH DE FR GB IT LI LU NL SE**

(56) References cited:
**DE-A-1 815 340**
**DE-A-2 513 685**
**DE-A-2 825 739**
**US-A-4 195 009**

(73) Proprietor: **Appalachian Corporation S.A.
Avenue Justo Arosemena y Calle 23
Panama (PA)**

(72) Inventor: **de Haan, Rudi
DECEASED
DECEASED (NL)**

(74) Representative: **Lips, Hendrik Jan George, Ir.
et al
HAAGSCH OCTROOIBUREAU Postbus 97702
NL-2509 GC 's-Gravenhage (NL)**

Courier Press, Leamington Spa, England.

EP 0 057 488 B1

## Description

The invention relates to a spray-on corrosion inhibiting composition, especially for the protection of hollow metal parts, especially of steel or iron parts, such as automobiles and parts thereof, ships, tanks, metal construction works such as bridges etc.

For a corrosion inhibiting treatment of cars and the like, especially for the protection of the interior of steel parts thereof, the so-called ML-treatment is used on a large scale nowadays. In this treatment the surfaces to be protected are sprayed with a liquid compound, which contains neutralized oxidized petrolates, microcrystalline waxes, and surfactants such as calcium sulfonates, barium sulfonate, amines etc., the whole being dissolved in an aliphatic hydrocarbon such as turpentine. When this ML-compound is sprayed on, the solvent evaporates and a wax-like soft film remains behind on the treated metal surface.,

This ML-treatment has the drawback that the soft film actually remains in the liquid state and that by undesired causes it may locally disappear from the metal surface, so that corrosion or rust may occur there, which in the case of ferrous metals will eventually lead to rusting through.

Another drawback is that the solvent used (turpentine) evaporates after the spraying and is therefore lost, whereas moreover the spraying implies working in an unhealthy environment.

In connection with the drawbacks inherent in the ML-treatment, other solutions have been searched for and recently a start was made with the so-called hot-melt treatment. Here, the metal surfaces to be treated are sprayed with a heated liquid thermoplastic material, which after cooling solidifies into a thin protective film. Hot-melt gives satisfactory results but has the drawback that, although hot-melt can be applied relatively easily on separate parts, it requires a relatively expensive and complicated treatment to apply hot-melt on total constructions. In the case of cars with self-supporting bodies, a hot-melt treatment is for that reason too expensive.

It is the purpose of the present invention to provide a different solution which does not have the drawbacks of ML, but which is still as easy as simple to apply. For that purpose the corrosion inhibiting composition according to the invention is characterized in that it contains a urethane prepolymer which cures when exposed to the ambient air, together with a corrosion inhibiting substance suspended or dissolved in a not-evaporating, thin, mineral oil.

The invention is based on the insight that it is possible to let a suitable prepolymer cure by the ambient air in the presence of a thin mineral oil, which itself does not participate in the curing reaction. During the further curing in the ambient air a further cross-linking of the prepolymer takes place, so that the mineral oil present is enclosed, as it were, in the cross-linked structure. In this way one obtains on the metal surface a thin, very flexible film, in which the oil and the protecting substance are held in the cross-linked structure of the polymer, so that an integral film is obtained, which cannot be damaged and which in an efficient way provides protection against rust and corrosion.

Preferably the prepolymer is a di-isocyanate prepolymer, formed from a di-isocyanate and a hydroxyl groups containing polymeric compound. The polymeric compound may e.g. be a polyester or a polyether. Particularly good results have been obtained by using a polybutadiene rubber with end position hydroxyl groups as a polymeric compound. With a suitable excess of di-isocyanate one obtains with polybutadiene rubber a prepolymer, which cures in reaction with the water from the ambient air.

As is the case with ML, calcium sulfonate can be used as a corrosion inhibiting substance. It is also efficient to use calcium sulfonate/carbonate complex.

Diphenylmethanedi-isocyanate e.g. has appeared to be a suitable di-isocyanate.

Thus it is possible to prepare in an efficient way a corrosion inhibiting composition, which contains 5—40% by weight of di-isocyanate prepolymer, 30—40% by weight of corrosion-inhibiting substance, and 50—20% by weight of a non reactive mineral oil.

The compound according to the invention has a number of major advantages over the existing means such as ML. Thus the compound according to the invention is completely free of solvent, which means that no material is lost during the spraying thereof, whereas the environment cannot be polluted as a result of evaporation of a solvent.

Moreover, the deposited protective film on the metal surface does not drip or leak, not even at higher temperatures.

Finally, the composition can be applied with normal, simple spraying equipment. This means on the one hand, that the corrosion inhibiting treatment can be carried out at relatively low costs, whereas on the other hand it is universally suitable for numerous applications, such as the protection of cars, all types of ballast spaces on board of ships, etc.

For the preparation of a corrosion inhibiting compound according to the invention on the basis of a di-isocyanate polybutadiene prepolymer, one starts from a mixture of 5—15 parts by weight of terminal hydroxyl groups containing polybutadiene and 30—50 parts by weight of di-isocyanate, which after having been decanted, is brought into 64—33 parts by weight of aromatic mineral oil, to which usual catalysts and molecule sieves etc. can be added.

Possibly after heating, to start the reaction, the reaction takes place between the di-isocyanate and the polybutadiene, the reaction being allowed to go on until stabilisation has been reached, whereafter the mixture obtained is cooled. Subsequently calcium sulfonate or a calcium sulfonate/carbonate complex (the actual corrosion inhibiting substance) is added to the mixture in a desired quantity of 30—40% by weight. In view of the capacity of being sprayed of the compound thus obtained, it may be desirable to lower the viscosity, which may be done by adding to this compound a diluent such as a non-evaporating aliphatic mineral oil.

As a result one obtains a low-viscous liquid reactive mixture, which cures and cross-links at exposal to air.

Particularly good results are obtained with a commercial polybutadiene, traded by Metall-gesellschaft under the name ARCO poly B.D. 45 H.T., a polybutadiene rubber with terminal hydroxyl groups, an average molecular weight of 2800 and a functionality of 2.2—2.4.

Furthermore, 0.1—2% by weight of dibutyltin-laureate is an efficient reaction catalyst for the preparation of the prepolymer.

Furthermore, Gulf 4.P., a basic, non-doped oil is a suitable diluent oil which has a low viscosity and is non-reactive.

The composition according to the invention can be packed easily in closed tins and is thus protected against the ambient air, so that no undesired curing in the reactive mixture can take place. If desired, an inert gas, e.g. nitrogen, can be applied above the liquid in the tins.

Furthermore it is possible to prepare the composition in a somewhat more thickened form and to dilute it, when it is used, with a suitable, non-evaporating oil. This allows to pack and store the corrosion inhibiting composition according to the invention in a more concentrated form.

## Claims

1. Spray-on corrosion inhibiting composition, in particular for the protection of hollow metal parts, characterized in that the composition contains a urethane prepolymer which cures on exposure to ambient air, together with a corrosion inhibiting substance suspended or dissolved in a non-evaporating, thin, mineral oil.

2. Composition according to claim 1, characterized in that the urethane prepolymer is a di-isocyanate prepolymer.

3. Composition according to claim 2, characterized in that the urethane prepolymer is a prepolymer from a di-isocyanate and a hydroxyl groups-containing polymeric compound.

4. Composition according to claim 3, characterized in that the polymeric compound is a polyester.

5. Composition according to claim 3, characterized in that the polymeric compound is a polyether.

6. Composition according to claim 3, characterized in that the polymeric compound is a polybutadiene rubber with end position hydroxyl groups.

7. Composition according to any one of the preceding claims, characterized in that the corrosion-inhibiting substance is calcium sulfonate or a calcium sulfonate/carbonate complex.

8. Composition according to any one of the claims 3—7, characterized in that the di-isocyanate is diphenylmethane di-isocyanate.

9. Composition according to any one of the claims 2—7, characterized in that it contains 5—40% by weight of di-isocyanate prepolymer, 30—40% by weight of corrosion-inhibiting substance, and 50—20% by weight of a non-reactive mineral oil.

10. Process for the preparation of a corrosion inhibiting composition according to the claims 6—9, characterized in that a mixture of 5—15 parts by weight of terminal hydroxyl groups-containing polybutadiene and 30—50 parts by weight of di-isocyanate in 64—33 parts by weight of aromatic mineral oil is allowed to react until stabilisation has been reached, whereafter, after cooling, 30—40 parts by weight of calcium sulfonate/carbonate complex are added and mixed.

11. Process according to claim 10, characterized in that the reaction is carried out in the presence of a catalyst and molecular sieve material.

12. Process according to claim 11, characterized in that 0.1—2% by weight of dibutyl tin laureate is added as a catalyst.

13. Process according to claims 10—12, characterized in that the viscosity of the product obtained is adjusted by adding a thin aliphatic mineral oil as a diluent.

14. Use of an anticorrosive composition according to one of the preceding claims as a protective coating for automobiles and parts thereof.

15. Use of an anticorrosive composition according to one of the claims 1—13 as a protective coating for ships, tanks and construction works such as bridges.

## Patentansprüche

1. Vor Korrosion schützende Sprühzusammensetzung, insbesondere für den Schutz von Hohlmetalleinzelteilen dadurch gekennzeichnet, dass die Zusammensetzung ein Urethanpräpolymer das aushärtet, wenn es der Umgebungsluft ausgesetzt wird, zusammen mit einer vor Korrosion schützenden Substanz enthält, die in einem nicht verdampfenden dünnen Mineralöl suspendiert oder aufgelöst ist.

2. Zusammensetzung gemäss Anspruch 1, dadurch gekennzeichnet, dass das Urethanpräpolymer ein Diisocyanat-Präpolymer ist.

3. Zusammensetzung gemäss Anspruch 2, dadurch gekennzeichnet, dass das Urethanpräpolymer ein Präpolymer von einem Diisocyanat und einer Hydroxylgruppen enthaltenden polymerischen Verbindung ist.

4. Zusammensetzung gemäss Anspruch 3, dadurch gekennzeichnet, dass die polymerische Verbindung ein Polyester ist.

5. Zusammensetzung gemäss Anspruch 3, dadurch gekennzeichnet, dass die polymerische Verbindung ein Polyäther ist.

6. Zusammensetzung gemäss Anspruch 3, dadurch gekennzeichnet, dass die polymerische Verbindung ein Polybutadiengummi mit endständigen Hydroxylgruppen ist.

7. Zusammensetzung gemäss einem der vorangehenden Ansprüche, dadurch gekennzeichnet, dass die vor Korrosion schützende Substanz Calciumsulfonat oder ein Calciumsulfonat/-carbonat Komplex ist.

8. Zusammensetzung gemäss einem der Ansprüche 3 bis 7, dadurch gekennzeichnet, dass das Diisocyanat Diphenylmethan-Diisocyanat ist.

9. Zusammensetzung gemäss einem der Ansprüche 2 bis 7, dadurch gekennzeichnet, dass sie 5—40 Gew.-% Diisocyanat-Präpolymer, 30—40 Gew.% Korrosion hemmende Substanz und 50—20% Gew.% nicht-reaktives Mineralöl enthält.

10. Verfahren zur Herstellung einer Korrosion hemmenden Zusammensetzung gemäss den Ansprüchen 6 bis 9, dadurch gekennzeichnet, dass man ein Gemisch von 5—15 Gewichtsteilen von endständige Hydroxylgruppen enthaltendem Polybutadien und 30 bis 50 Gewichtsteilen von Diisocyanat in 64—33 Gewichtsteilen von aromatischem Mineralöl reagieren lässt bis Stabilisation erhalten ist, wonach nach Kühlung 30 bis 40 Gewichtsteile von einem Calciumsulfonat/-carbonat Komplex zugesetzt und gemischt sind.

11. Verfahren gemäss Anspruch 10, dadurch gekennzeichnet, dass die Reaktion in Anwesenheit von einem Katalysator und molekularem Siebmaterial durchgeführt ist.

12. Verfahren gemäss Anspruch 11, dadurch gekennzeichnet, dass 0,1 bis 2 Gew.% Dibutyl-Zinnlaureat als Katalysator zugesetzt ist.

13. Verfahren gemäss den Ansprüchen 10 bis 12, dadurch gekennzeichnet, dass die Viskosität des erhaltenen Produkts durch Hinzufügung von dünnem aliphatischem Mineralöl als Verdünnungsmittel eingestellt ist.

14. Gebrauch einer Korrosionsschutzmittelzusammensetzung gemäss einem der vorangehenden Ansprüche als Schutzbekleidung für Automobile und deren Teile.

15. Gebrauch einer Korrosionsschutzmittelzusammensetzung gemäss einem der Ansprüche 1 bis 13 als Schutzbekleidung für Schiffe, Tanks und Konstruktionen wie Brücken.

**Revendications**

1. Composition pulvérisable inhibitant la corrosion, notamment pour la protection de pièces de métal creuses, caractérisée par le fait, que la composition contient un prépolymère d'uréthane qui durcit en l'exposant à l'air ambiant, ensemble avec une substance inhibitant la corrosion qui est suspendue ou dissoute dans une huile minérale mince qui n'évapore pas.

2. Composition selon la revendication 1, caractérisée par le fait que le prépolymère d'uréthane est un prépolymère de diisocyanate.

3. Composition selon la revendication 2, caractérisée par le fait que le prépolymère d'uréthane est un prépolymère d'un diisocyanate et d'un composé polymère contenant des groupes d'hydroxyl.

4. Composition selon la revendication 3, caractérisée par le fait que le composé polymère est un polyester.

5. Composition selon la revendication 3, caractérisée par le fait que le composé polymère est un polyéther.

6. Composition selon la revendication 3, caractérisée par le fait que le composé polymère est un caoutchouc de polybutadiène avec des groupes d'hydroxyl terminaux.

7. Composition selon l'une quelconque des revendications précédentes, caractérisée par le fait que la substance inhibitant la corrosion est sulfonate de calcium ou un complexe de sulfonate/carbonate de calcium.

8. Composition selon l'une quelconque des revendications 3 à 7, caractérisée par le fait que le diisocyanate est diphénylméthane diisocyanate.

9. Composition selon l'une quelconque des revendications 2 à 7, caractérisée par le fait qu'elle contient 5 à 40% en poids de prépolymère de diisocyanate, 30 à 40% en poids de substance inhibitant la corrosion et 50 à 20% en poids d'une huile minérale non-réactive.

10. Procédé de préparation d'une composition inhibitant la corrosion selon les revendications 6 à 9, caractérisé par le fait qu'un mélange de 5 à 15 parties en poids de polybutadiène contenant des groupes d'hydroxyl terminaux et 30 à 50 parties en poids de diisocyanate dans 64 à 33 parties en poids d'huile minérale aromatique est permis de réager jusqu'à une stabilisation a été obtenue, après quoi après refroidissement 30 à 40 parties en poids de complexe de sulfonate/carbonate de calcium sont ajoutées et mélangées.

11. Procédé selon la revendication 10, caractérisé par le fait que la réaction est exécutée dans la présence d'une catalyseur et de matière de crible moléculaire.

12. Procédé selon la revendication 11, caractérisé par le fait que 0,1—2% en poids de lauréate stannique de dibutyle est ajouté comme catalyseur.

13. Procédé selon les revendications 10 à 12, caractérisé par le fait que la viscosité du produit obtenu est réglée en ajoutant une huile minérale aliphatique mince comme diluant.

14. Emploi d'une composition anticorrosive selon l'une quelconque des revendications précédentes comme revêtement de protection pour automobiles et pièces de celles-ci.

15. Emploi d'une composition anticorrosive selon l'une quelconque des revendications 1 à 13 comme revêtement de protection pour vaisseaux, tanks et des constructions telles que des ponts.